# FASCICULE DE BREVET EUROPEEN

(11) **EP 1 653 117 B1**
(45) Date de publication et mention de la délivrance du brevet: **28.05.2008**
(21) Numéro de dépôt: 05292226.7
(22) Date de dépôt: 21.10.2005
(51) Int. Cl.: F16F 15/02, F16F 15/22

(54) **Procédé d'équilibrage pour moteur et dispositif pour la mise en oeuvre de ce procédé**
Verfahren zum Auswuchten eines Motors und Vorrichtung zum Durchführen des Verfahrens
Engine balancing method and device for accomplishing the method

(30) Priorité: 28.10.2004 FR 0411533
(43) Date de publication de la demande: 03.05.2006
(73) Titulaire: HUTCHINSON, 75008 Paris (FR)
(72) Inventeur: Loubat, Patrice, 28220 La Ferte Verneuil (FR); Hourlier, François, 28200 La Chapelle du Noyer (FR); Vandervorst, Eric, 28200 Valainville (FR)
(74) Mandataire: Burbaud, Eric

(56) Documents cités:
- EP-A- 0 464 598
- EP-A- 0 760 422
- DE-B- 1 148 108
- FR-A- 2 533 042

## Description

La présente invention est relative aux procédés d'équilibrage pour moteurs notamment à combustion interne, et aux dispositifs pour la mise en oeuvre de ces procédés.

Plus particulièrement, l'invention concerne un procédé d'équilibrage pour un moteur, notamment pour moteur à combustion interne de véhicule, générant un couple de déséquilibrage d'ordre 1 (autrement dit, à la fréquence correspondant à la rotation du moteur), lequel couple de déséquilibrage excite au moins un mode vibratoire.

On connaît des procédés de ce type dans lesquels l'équilibrage est obtenu par ajout d'un arbre d'équilibrage, comme décrit par exemple dans le document WO-A-02/075134 pour les moteurs à combustion interne à 3 cylindres.

Ces procédés connus présentent toutefois les inconvénients suivants : d'une part, l'arbre d'équilibrage est une pièce coûteuse et d'autre part, cet arbre est une pièce relativement lourde dont la mise en mouvement occasionne un gaspillage d'énergie.

La présente invention a notamment pour but de pallier ces inconvénients.

On connaît par ailleurs, du document FR-A-2 533 042, un dispositif antivibratoire dans lequel une masse battante est déplacée en opposition de phase avec un corps en rotation, pour neutraliser les vibrations produites par ce corps.

Pour pallier les inconvénients susmentionnés, l'invention propose un procédé d'équilibrage pour un moteur générant un couple de déséquilibrage d'ordre 1, lequel couple de déséquilibrage excite au moins un mode vibratoire, procédé dans lequel on annule au moins partiellement le couple de déséquilibrage d'ordre 1 en faisant générer à chaque instant un couple opposé au couple de déséquilibrage par au moins un batteur piloté lié au moteur, dans au moins une plage de fréquences d'équilibrage voisine dudit mode vibratoire excité par le couple de déséquilibrage,
et on détecte au moins le régime du moteur et on commande ledit batteur en fonction de ce régime, selon une loi prédéterminée adaptée pour que le batteur annule au moins partiellement le couple de déséquilibrage d'ordre 1.

Grâce à ces dispositions, on équilibre au moins partiellement le moteur pour un prix modéré, et surtout avec un surcroît très limité de consommation énergétique. Ce surcroît de consommation d'énergie est d'autant plus limité que l'on peut arrêter l'actionnement du batteur piloté lorsque le moteur tourne à une vitesse supérieure à une certaine vitesse de rotation limite.

Par batteur piloté, on entend :
- un batteur actif, avec un actionneur générant un contre effort agissant en opposition avec le couple de déséquilibrage (des exemples de batteurs actifs sont décrits par exemple dans la demande de brevet FR-A-2 860 658, ou encore dans le document US-A-5 718 418, ou autres),
- ou un batteur à mode variable, dont le mode est réglable par exemple en faisant varier la raideur ou la masse.

Dans divers modes de réalisation du procédé selon l'invention, on peut éventuellement avoir recours en outre à l'une et/ou à l'autre des dispositions suivantes :
- on utilise au moins un batteur actif pour générer à chaque instant un couple opposé au couple de déséquilibrage ;
- on utilise au moins deux batteurs actifs et on commande ces batteurs actifs en opposition de phase pour générer à chaque instant un couple opposé au couple de déséquilibrage ;
- le moteur est à combustion interne, on détecte (directement ou non) au moins une phase du cycle de fonctionnement du moteur et on commande ledit batteur en fonction de cette détection, selon une loi prédéterminée adaptée pour que le batteur annule au moins partiellement le couple de déséquilibrage d'ordre 1 ;
- le moteur dont on annule le couple de déséquilibrage est un moteur à combustion interne à deux, trois ou cinq cylindres ;
- le moteur dont on annule le couple de déséquilibrage est un moteur à combustion interne de véhicule, relié à la caisse du véhicule par une suspension pendulaire ;
- la plage de fréquences d'équilibrage est comprise entre une fréquence de ralenti du moteur et √2.f_{Θx} où f_{Θx} est la fréquence dudit mode vibratoire,
- on équilibre un moteur de véhicule automobile.

Par ailleurs, l'invention a également pour objet un dispositif pour la mise en oeuvre d'un procédé tel que défini ci-dessus, ce dispositif comprenant un moteur qui, en fonctionnement, génère un couple de déséquilibrage d'ordre 1, lequel couple de déséquilibrage excite au moins un mode vibratoire, caractérisé en ce qu'il comporte au moins un batteur piloté qui est lié au moteur et qui est commandé par au moins une unité centrale électronique pour annuler au moins partiellement le couple de déséquilibrage d'ordre 1, en faisant générer à chaque instant un couple opposé au couple de déséquilibrage par le batteur, dans au moins une plage de fréquences d'équilibrage voisine dudit mode vibratoire excité par le couple de déséquilibrage, le dispositif comportant en outre au moins un capteur adapté pour détecter au moins le régime du moteur, l'unité centrale étant adaptée pour commander le batteur en fonction de ce régime, selon une loi prédéterminée adaptée pour que le batteur annule au moins partiellement le couple de déséquilibrage d'ordre 1.

Dans divers modes de réalisation du dispositif selon l'invention, on peut éventuellement avoir recours en outre à l'une et/ou à l'autre des dispositions suivantes :
- ledit batteur est un batteur actif ;
- le dispositif comporte au moins deux batteurs actifs commandés par l'unité centrale en opposition de phase ;
- le moteur est un moteur à combustion interne et le dispositif comporte au moins un capteur adapté pour détecter au moins une étape particulière du cycle de fonctionnement du moteur et on commande ledit batteur en fonction de cette détection, selon une loi prédéterminée adaptée pour que le batteur annule au moins partiellement le couple de déséquilibrage d'ordre 1 ;
- le moteur est un moteur à combustion interne à deux, trois ou cinq cylindres ;
- le dispositif comprend un véhicule présentant une caisse, ledit moteur étant relié à la caisse par une suspension pendulaire ;
- le moteur appartient à un bloc motopropulseur qui s'étend longitudinalement entre deux extrémités et les deux batteurs sont situés respectivement près des deux extrémités du bloc motopropulseur ;
- la plage de fréquences d'équilibrage est comprise entre une fréquence de ralenti du moteur et √2.f_{Θx}, où f_{Θx} est la fréquence dudit mode vibratoire.

Enfin, l'invention a encore pour objet un véhicule automobile comportant un dispositif tel que décrit ci-dessus.

D'autres caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue schématique en perspective d'un véhicule pourvu d'un dispositif antivibratoire selon une forme de réalisation de l'invention ;
- les figures 2 et 3 sont respectivement des vues schématiques d'avant et de dessus du groupe motopropulseur de la figure 1 ;
- et les figures 4 à 6 sont des graphes montrant l'intensité des vibrations au niveau d'un des sièges du véhicule, respectivement selon trois axes perpendiculaires.

Sur les différentes figures, les mêmes références désignent des éléments identiques ou similaires.

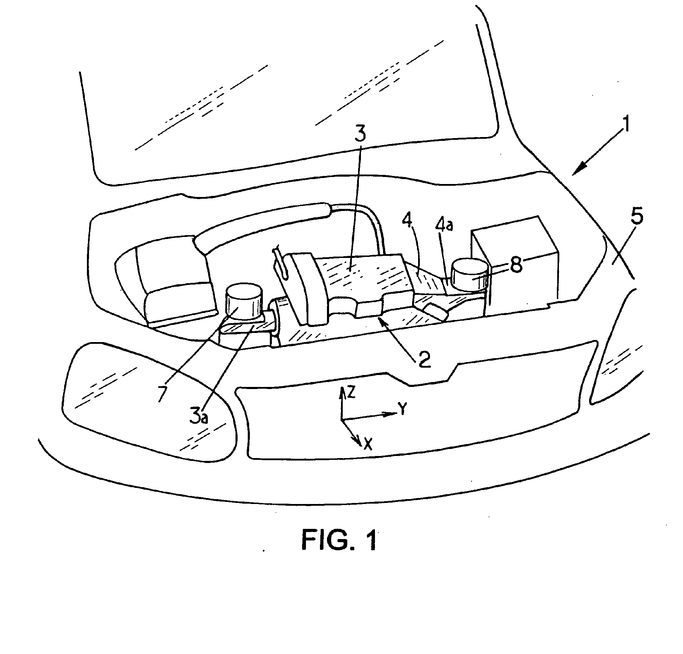

La figure 1 montre un véhicule automobile 1 comprenant un groupe motopropulseur 2, qui comprend un moteur 3 à combustion interne (par exemple un moteur à deux, trois ou cinq cylindres) et une boîte de vitesses 4 fixée rigidement au moteur 2. Le bloc motopropulseur 2 peut s'étendre par exemple selon une direction transversale Y du véhicule et il peut éventuellement comporter, à ses deux extrémités longitudinales, deux consoles rigides 3a, 4a solidaires respectivement du moteur 3 et de la boîte de vitesses 4.

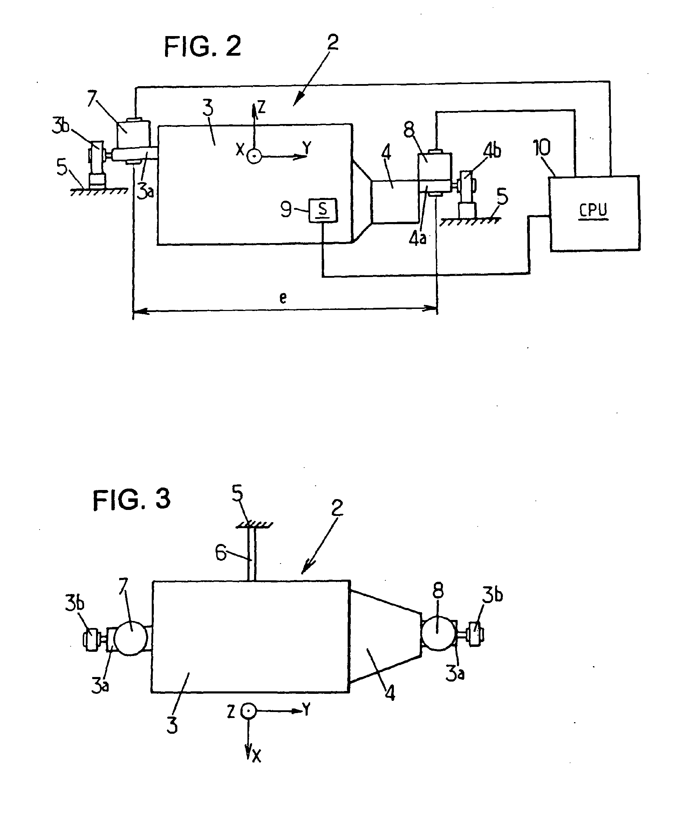

Le bloc motopropulseur 2 est relié à la caisse 5 du véhicule par une suspension moteur qui, dans l'exemple représenté, est de type pendulaire. Comme on peut le voir plus en détail sur les figures 2 et 3, cette suspension pendulaire peut comprendre par exemple :
- deux supports élastiques 3b, 4b, qui peuvent relier par exemple les deux consoles 3a, 4a à la caisse 5 du véhicule,
- et une bielle de reprise de couple 6 limitant et amortissant les mouvement de pivotement du bloc motopropulseur 2 autour de l'axe transversal Y, cette bielle reliant le bloc motopropulseur 2 à la caisse 5 et s'étendant par exemple dans le plan X, Z.

En fonctionnement, le moteur 3 génère un couple de déséquilibrage d'ordre 1, c'est-à-dire à la fréquence correspondant à la rotation du moteur. Ces effets peuvent être particulièrement sensibles avec un moteur 3 à deux ou trois cylindres, et notamment aux régimes proches du ralenti. Par exemple, si le régime de ralenti est de 900 tours/mn, la fréquence d'excitation correspondante f_{1N} (ou excitation d'ordre 1) est de 15 Hz.

Le couple de déséquilibrage en question peut être un couple en rotation autour de l'axe longitudinal X du véhicule et/ou un couple en rotation autour de l'axe vertical Z.

Ce couple de déséquilibrage excite certains modes vibratoires, notamment :
- un mode vibratoire de tangage Θx en rotation autour de l'axe X, à une fréquence f_{Θx},
- et/ou un mode vibratoire Θz en rotation autour de l'axe Z, à une fréquence f_{Θz}.

Ce ou ces mode(s) vibratoire(s) en rotation sont par ailleurs liés à des modes de pompage, notamment un mode de pompage Tz en direction verticale, en fonction de la géométrie du bloc motopropulseur 2.

L'excitation de ces différents modes vibratoires entraîne des vibrations transmises à la caisse 5 du véhicule et ressenties désagréablement par les utilisateurs du véhicule, notamment lorsque le moteur fonctionne à bas régime.

Selon l'invention, on annule au moins partiellement le ou les couple(s) de déséquilibrage d'ordre 1, en faisant générer à chaque instant au moins un couple opposé au(x) couple(s) de déséquilibrage par au moins un batteur piloté lié au bloc motopropulseur 2, dans au moins une plage de fréquences d'équilibrage voisine du ou des mode(s) vibratoire(s) excité(s) par le ou les couple(s) de déséquilibrage.

Par batteur piloté, on entend :
- soit un batteur actif, avec un actionneur générant un contre effort agissant en opposition avec le couple de déséquilibrage (des exemples de batteurs actifs sont décrits par exemple dans la demande de brevet FR-A-2 860 658, ou encore dans le document US-A-5 718 418, ou autres),
- soit un batteur à mode variable, dont le mode est réglable par exemple en faisant varier la raideur des moyens élastiques de rappel de la partie battante ou la masse de la partie battante.

Dans l'exemple représenté sur les figures 1 à 3, le bloc motopropulseur 2 est équipé de deux batteurs actifs 7, 8 fixés par exemple sur les consoles 3a, 4a susmentionnées de façon à maximiser la distance e entre les batteurs 7, 8 selon la direction Y. Ces batteurs actifs sont commandés par une unité centrale électronique 10 (CPU), en fonction des informations données par un capteur 9 (S) donnant par exemple un signal impulsionnel correspondant au point mort haut d'un des pistons du moteur 2, ce qui permet de connaître à la fois le régime moteur et la phase du cycle de fonctionnement du moteur.

Les batteurs actifs 7, 8 peuvent être actionnés en opposition de phase par l'unité centrale 10 pour générer à chaque instant un couple opposé au couple de déséquilibrage. Le couple de déséquilibrage est connu à chaque instant puisqu'il est lié de façon biunivoque à l'information donnée par le capteur 9, de sorte que les batteurs actifs 7, 8 peuvent être actionnés par l'unité centrale 10 selon une loi prédéterminée adaptée pour que les batteurs annulent au moins partiellement le couple de déséquilibrage d'ordre 1, voire également un couple de déséquilibrage d'ordre 2.

La disposition représentée sur les dessins, avec les batteurs 7, 8 orientés verticalement pour produire des forces verticales vers le haut et vers le bas, permet essentiellement d'annuler le couple de déséquilibrage autour de l'axe X et donc de traiter le mode Θx. Il serait toutefois possible d'orienter les batteurs 7, 8 différemment pour annuler simultanément le couple de déséquilibrage autour de l'axe Z et donc traiter aussi le mode Θz. En variante, il serait possible de prévoir au moins un batteur actif supplémentaire, voire deux batteurs supplémentaires, pour annuler spécifiquement le couple de déséquilibrage autour de l'axe Z et donc traiter le mode Θz.

La plage de fréquences d'équilibrage susmentionnée peut être comprise par exemple entre la fréquence de ralenti du moteur f_{1N} et √2.f_{Θx}, où f_{Θx} est la fréquence du mode vibratoire traité excité par la fréquence de ralenti.

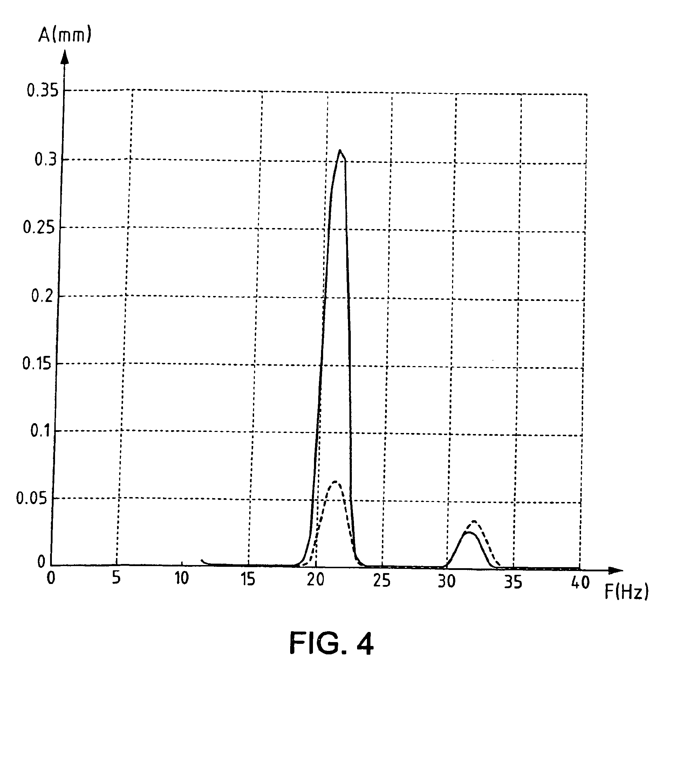

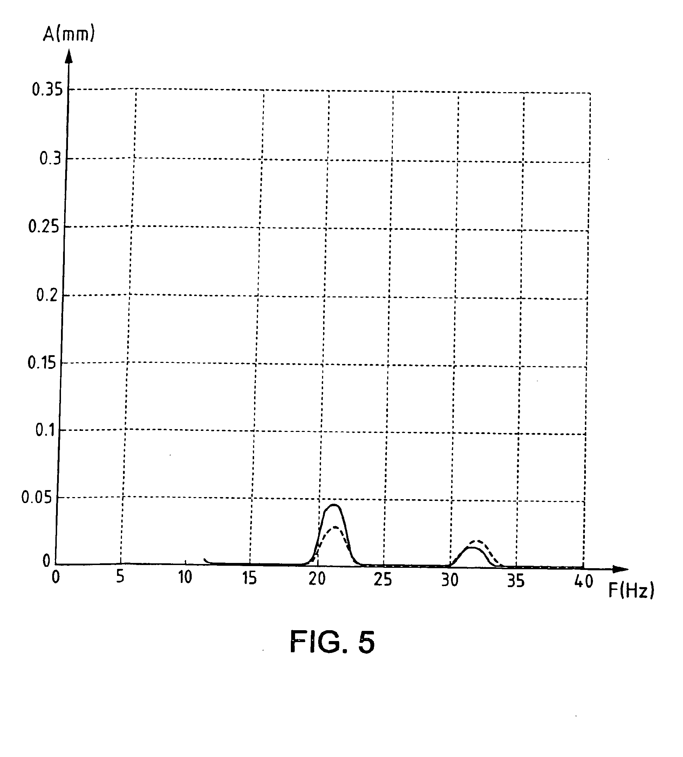

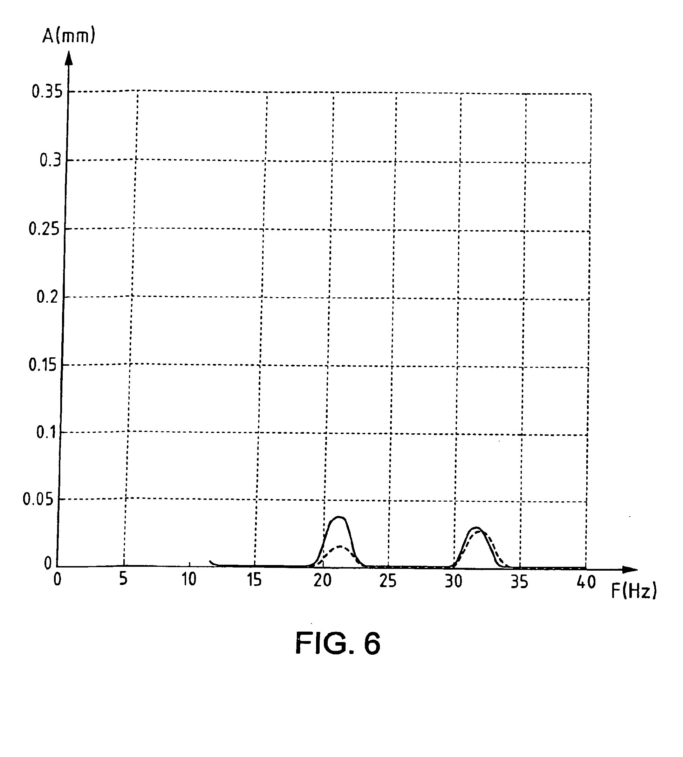

L'invention permet de réduire très sensiblement les vibrations perçues par l'utilisateur du véhicule, comme le montrent les graphes des figures 4 à 6 qui représentent, en fonction de la fréquence f, l'amplitude A des vibrations générées par le moteur 3 au ralenti, au niveau d'un des sièges d'un véhicule 1 particulier doté d'un moteur à trois cylindres, sans l'invention (courbe en trait plein) et avec les batteurs actifs 7, 8 décrites ci-dessus (courbe en pointillés). La figure 4 montre les vibrations mesurées selon l'axe vertical Z, la figure 5 selon l'axe longitudinal X du véhicule et la figure 6 selon l'axe transversal Y du véhicule.

## Revendications

1. Procédé d'équilibrage pour un moteur (3) générant un couple de déséquilibrage d'ordre 1, lequel couple de déséquilibrage excite au moins un mode vibratoire,
procédé dans lequel on annule au moins partiellement le couple de déséquilibrage d'ordre 1 en faisant générer à chaque instant un couple opposé au couple de déséquilibrage par au moins un batteur piloté (7, 8) lié au moteur (3), dans au moins une plage de fréquences d'équilibrage voisine dudit mode vibratoire excité par le couple de déséquilibrage,
et on détecte au moins le régime du moteur et on commande ledit batteur (7, 8) en fonction de ce régime, selon une loi prédéterminée adaptée pour que le batteur annule au moins partiellement le couple de déséquilibrage d'ordre 1.

2. Procédé selon la revendication 1, dans lequel on utilise au moins un batteur actif (7, 8) pour générer à chaque instant un couple opposé au couple de déséquilibrage.

3. Procédé selon la revendication 2, dans lequel on utilise au moins deux batteurs actifs (7, 8) et on commande ces batteurs actifs en opposition de phase pour générer à chaque instant un couple opposé au couple de déséquilibrage.

4. Procédé selon l'une quelconque des revendications précédentes, dans lequel le moteur est à combustion interne, on détecte au moins une phase du cycle de fonctionnement du moteur (3) et on commande ledit batteur (7, 8) en fonction de cette détection, selon une loi prédéterminée adaptée pour que le batteur annule au moins partiellement le couple de déséquilibrage d'ordre 1.

5. Procédé selon l'une quelconque des revendications précédentes, dans lequel le moteur (3) dont on annule le couple de déséquilibrage est un moteur à combustion interne à deux, trois ou cinq cylindres.

6. Procédé selon l'une quelconque des revendications précédentes, dans lequel le moteur (3) dont on annule le couple de déséquilibrage est un moteur à combustion interne de véhicule, relié à la caisse (5) du véhicule par une suspension pendulaire.

7. Procédé selon l'une quelconque des revendications précédentes, dans lequel la plage de fréquences d'équilibrage est comprise entre une fréquence de ralenti du moteur et √2. f_{⊖x}, où f_{⊖x} est la fréquence dudit mode vibratoire.

8. Procédé selon l'une quelconque des revendications précédentes, dans lequel on équilibre un moteur de véhicule automobile.

9. Dispositif pour la mise en oeuvre d'un procédé selon l'une quelconque des revendications précédentes, ce dispositif comprenant un moteur (3) qui, en fonctionnement, génère un couple de déséquilibrage d'ordre 1, lequel couple de déséquilibrage excite au moins un mode vibratoire, ce dispositif comportant au moins un batteur piloté (7, 8) qui est lié au moteur (3) et qui est commandé par au moins une unité centrale électronique (10) pour annuler au moins partiellement le couple de déséquilibrage d'ordre 1 en faisant générer à chaque instant un couple opposé au couple de déséquilibrage par le batteur (7, 8), dans au moins une plage de fréquences d'équilibrage voisine dudit mode vibratoire excité par le couple de déséquilibrage, le dispositif comportant en outre au moins un capteur (9) adapté pour détecter au moins le régime du moteur (3), l'unité centrale étant adaptée pour commander le batteur (7, 8) en fonction de ce régime, selon une loi prédéterminée adaptée pour que le batteur annule au moins partiellement le couple de déséquilibrage d'ordre 1.

10. Dispositif selon la revendication 9, dans lequel ledit batteur (7, 8) est un batteur actif.

11. Dispositif selon la revendication 10, comportant au moins deux batteurs actifs (7, 8) commandés par l'unité centrale (10) en opposition de phase.

12. Dispositif selon l'une quelconque des revendications 9 à 11, dans lequel le moteur (3) est un moteur à combustion interne et le dispositif comporte au moins un capteur adapté pour détecter au moins une étape particulière du cycle de fonctionnement du moteur et on commande ledit batteur en fonction de cette détection, selon une loi prédéterminée adaptée pour que le batteur annule au moins partiellement le couple de déséquilibrage d'ordre 1.

13. Dispositif selon l'une quelconque des revendications 9 à 12, dans lequel le moteur (3) est un moteur à combustion interne à deux, trois ou cinq cylindres.

14. Dispositif selon l'une quelconque des revendications 9 à 13, dans lequel le dispositif comprend un véhicule (1) présentant une caisse (5), ledit moteur (3) étant relié à la caisse (5) par une suspension pendulaire (4a, 4b, 6).

15. Dispositif selon l'une quelconque des revendications 9 à 14, dans lequel le moteur (3) appartient à un bloc motopropulseur (2) qui s'étend longitudinalement entre deux extrémités et les deux batteurs (7, 8) sont situés respectivement près des deux extrémités du bloc motopropulseur.

16. Dispositif selon l'une quelconque des revendications 9 à 15, dans lequel la plage de fréquences d'équilibrage est comprise entre une fréquence de ralenti du moteur et √2.f_{Θx}, où f_{Θx} est la fréquence dudit mode vibratoire.

17. Véhicule automobile comportant un dispositif selon l'une quelconque des revendications 9 à 16.

## Claims

1. Balancing method for an engine (3) generating a first-order unbalanced torque, which unbalanced torque excites at least one vibration mode,
Wherein the first-order unbalanced torque is at least partially cancelled by generating at each instant a torque opposed to the unbalanced torque by means of at least one driven oscillator (7, 8) connected to the engine (3), in at least one balancing frequency range in the vicinity of the said vibration mode excited by the unbalanced torque,
And wherein at least the engine speed is detected and the said oscillator (7, 8) is controlled as a function of this speed according to a predetermined law designed so that the oscillator at least partially cancels the first-order unbalanced torque.

2. Method according to Claim 1, in which at least one active oscillator (7, 8) is used to generate at each instant a torque opposed to the unbalanced torque.

3. Method according to Claim 2, in which at least two active oscillators (7, 8) are used and these active oscillators are controlled in phase opposition so as to generate at each instant a torque opposed to the unbalanced torque.

4. Method according to any one of the preceding claims, in which at least one phase of the operating cycle of the engine (3) is detected and the said oscillator (7, 8) is controlled as a function of this detection according to a predetermined law designed so that the oscillator at least partially cancels the first-order unbalanced torque.

5. Method according to any one of the preceding claims, in which the engine (3) whose unbalanced torque is cancelled is an internal combustion engine with two, three or five cylinders.

6. Method according to any one of the preceding claims, in which the engine (3) whose unbalanced torque is cancelled is a vehicle internal combustion engine connected to the vehicle body (5) by a pendulum suspension.

7. Method according to any one of the preceding claims, in which the balancing frequency range is situated between an engine idle frequency and √2.f_{⊖x}, where f_{⊖x} is the frequency of the said vibration mode.

8. Method according to any one of the preceding claims, in which a motor of an automotive vehicle is balanced.

9. Device for implementing a method according to any one of the preceding claims, this device comprising an engine (3) which, during operation, generates a first-order unbalanced torque, which unbalanced torque excites at least one vibration mode, said device comprising at least one driven oscillator (7, 8) which is connected to the engine (3) and which is controlled by at least one central processing unit (10) so as to at least partially cancel the first-order unbalanced torque by generating at each instant a torque opposed to the unbalanced torque by means of the oscillator (7, 8) in at least one balancing frequency range in the vicinity of the said vibration mode excited by the unbalanced torque, the device further comprising at least one sensor (9) designed to detect at least the speed of the engine (3), the central processing unit being designed to control the oscillator (7, 8) as a function of this speed according to a predetermined law designed so that the oscillator at least partially cancels the first-order unbalanced torque.

10. Device according to Claim 9, in which the said oscillator (7, 8) is an active oscillator.

11. Device according to Claim 10, comprising at least two active oscillators (7, 8) controlled by the central processing unit (10) in phase opposition.

12. Device according to any one of Claims 9 to 11, in which the engine (3) is an internal combustion engine and the device comprises at least one sensor designed to detect at least one particular step of the operating cycle of the engine, and the said oscillator is controlled as a function of this detection according to a predetermined law designed so that the oscillator at least partially cancels the first-order unbalanced torque.

13. Device according to any one of Claims 9 to 12, in which the engine (3) is an internal combustion engine with two, three or five cylinders.

14. Device according to any one of Claims 9 to 13, in which the device comprises a vehicle (1) having a body (5), the said engine (3) being connected to the body (5) by a pendulum suspension (4a, 4b, 6).

15. Device according to any one of Claims 9 to 14, in which the engine (3) belongs to a propulsion unit (2) which extends longitudinally between two ends and the two oscillators (7, 8) are situated close to the two respective ends of the propulsion unit.

16. Device according to any one of Claims 9 to 15, in which the balancing frequency range is situated between an engine idle frequency and √2.f_{Θx}, where f_{Θx} is the frequency of the said vibration mode.

17. Automotive vehicle comprising a device according to anyone of claims 9 to 16.

## Patentansprüche

1. Verfahren zum Auswuchten für einen Motor (3), der ein Unwuchtdrehmoment erster Ordnung erzeugt, welches Unwuchtdrehmoment wenigstens eine Vibrationsart anregt,
wobei bei dem Verfahren das Unwuchtdrehmoment erster Ordnung wenigstens teilweise aufgehoben wird, indem zu jedem Zeitpunkt ein dem Unwuchtdrehmoment entgegen gesetztes Drehmoment durch wenigstens eine, mit dem Motor (3) verbundene, gesteuerte Trommeleinrichtung (7,8) in wenigstens einem Frequenzbereich zum Auswuchten erzeugt wird, der zu der von dem Unwuchtdrehmoment angeregten Vibrationsart benachbart ist,
und wenigstens die Drehzahl des Motors erfasst wird und die genannte Trommeleinrichtung (7, 8) in Abhängigkeit von dieser Drehzahl nach einem vorgegebenen, angepassten Gesetz gesteuert wird, damit die Trommeleinrichtung (7, 8) das Unwuchtdrehmoment erster Ordnung wenigstens teilweise aufhebt.

2. Verfahren nach Anspruch 1, bei dem wenigstens eine aktive Trommeleinrichtung (7, 8) verwendet wird, um zu jedem Zeitpunkt ein dem Unwuchtdrehmoment entgegen gesetztes Drehmoment zu erzeugen.

3. Verfahren nach Anspruch 2, bei dem wenigstens zwei aktive Trommeleinrichtungen (7, 8) verwendet werden, und diese aktiven Trommeleinrichtungen in entgegen gesetzter Phase gesteuert werden, um zu jedem Zeitpunkt ein dem Unwuchtdrehmoment entgegen gesetztes Drehmoment zu erzeugen.

4. Verfahren nach einem der vorhergehenden Ansprüche, bei dem der Motor ein Verbrennungsmotor ist, wenigstens eine Phase des Arbeitsspiels des Motors (3) erfasst wird und die genannte Trommeleinrichtung (7, 8)in Abhängigkeit von dieser Erfassung nach einem vorgegebenen, angepassten Gesetz gesteuert wird, damit die Trommeleinrichtung das Unwuchtdrehmoment erster Ordnung wenigstens teilweise aufhebt.

5. Verfahren nach einem der vorhergehenden Ansprüche, bei dem der Motor (3), dessen Unwuchtdrehmoment aufgehoben wird, ein Verbrennungsmotor mit zwei, drei oder fünf Zylindern ist.

6. Verfahren nach einem der vorhergehenden Ansprüche, bei dem der Motor (3), dessen Unwuchtdrehmoment aufgehoben wird, ein Fahrzeugverbrennungsmotor ist, der mit der Karosserie (5) des Fahrzeuges durch eine schwingende Aufhängung verbunden ist.

7. Verfahren nach einem der vorhergehenden Ansprüche, bei dem der Frequenzbereich zum Auswuchten zwischen einer Leerlauffrequenz des Motors und √2.fₑₓ liegt, wo fₑₓ die Frequenz der genannten Vibrationsart ist.

8. Verfahren nach einem der vorhergehenden Ansprüche, bei dem ein Kraftfahrzeugmotor ausgewuchtet wird.

9. Vorrichtung zur Verwendung eines Verfahrens nach einem der vorhergehenden Ansprüche, wobei diese Vorrichtung einen Motor (3) umfasst, der im Betrieb ein Unwuchtdrehmoment erster Ordnung erzeugt, welches Unwuchtdrehmoment wenigstens eine Vibrationsart anregt, wobei diese Vorrichtung wenigstens eine gesteuerte Trommeleinrichtung (7, 8) umfasst, die mit dem Motor (3) verbunden ist und die von wenigstens einer zentralen Steuereinheit (10) gesteuert wird, um das Unwuchtdrehmoment erster Ordnung wenigstens teilweise aufzuheben, indem zu jedem Zeitpunkt ein dem Unwuchtdrehmoment entgegen gesetztes Drehmoment durch die Trommeleinrichtung (7, 8) in wenigstens einem Frequenzbereich zum Auswuchten erzeugt wird, der zu der von dem Unwuchtdrehmoment angeregten genannten Vibrationsart benachbart ist, wobei die Vorrichtung außerdem wenigstens einen Sensor (9) umfasst, der dafür angepasst ist, wenigstens die Drehzahl des Motors (3) zu erfassen, wobei die Zentraleinheit dafür angepasst ist, die genannte Trommeleinrichtung (7, 8) in Abhängigkeit von dieser Drehzahl nach einem vorbestimmten, angepassten Gesetz zu steuern, damit die Trommeleinrichtung das Unwuchtdrehmoment erster Ordnung wenigstens teilweise aufhebt.

10. Vorrichtung nach Anspruch 9, bei der die genannte Trommeleinrichtung (7, 8) eine aktive Trommeleinrichtung ist.

11. Vorrichtung nach Anspruch 10, umfassend wenigstens zwei aktive Trommeleinrichtungen (7, 8), die von der zentralen Steuereinheit (10) in entgegen gesetzter Phase gesteuert werden.

12. Vorrichtung nach einem der Ansprüche 9 bis 11, bei dem der Motor (3) ein Verbrennungsmotor ist und die Vorrichtung wenigstens einen Sensor umfasst, der dafür angepasst ist, um wenigstens eine bestimmte Etappe des Arbeitsspiels des Motors zu erfassen, und die genannte Trommeleinrichtung wird in Abhängigkeit von dieser Erfassung nach einem vorgegebenen, angepassten Gesetz gesteuert, damit die Trommeleinrichtung das Unwuchtdrehmoment erster Ordnung wenigstens teilweise aufhebt.

13. Vorrichtung nach einem der Ansprüche 9 bis 12, bei dem der Motor (3) ein Verbrennungsmotor mit zwei, drei oder fünf Zylindern ist.

14. Vorrichtung nach einem der Ansprüche 9 bis 13, bei dem die Vorrichtung ein Fahrzeug (1) umfasst, das eine Karosserie (5) aufweist, wobei der genannte Motor (3) mit der Karosserie (5) durch eine schwingende Aufhängung (4a, 4b, 6) verbunden ist.

15. Vorrichtung nach einem der Ansprüche 9 bis 14, bei der der Motor (3) zu einem Antriebsblock (2) gehört, der sich longitudinal zwischen zwei Enden erstreckt, und die beiden Trommeleinrichtungen (7, 8) jeweils in der Nähe der beiden Enden des Antriebsblocks angeordnet sind.

16. Vorrichtung nach einem der Ansprüche 9 bis 15, bei dem der Frequenzbereich zum Auswuchten zwischen einer Leerlauffrequenz des Motors und √2.fₑₓ liegt, wo fₑₓ die Frequenz der genannten Vibrationsart ist.

17. Kraftfahrzeug, umfassend eine Vorrichtung nach einem der Ansprüche 9 bis 16.
